Europäisches Patentamt

European Patent Office

Office européen des brevets

(11) Publication number: **0 395 318**

**A2**

(12) # EUROPEAN PATENT APPLICATION

(21) Application number: **90304283.6**

(22) Date of filing: **20.04.90**

(51) Int. Cl.5: **F16J 13/24**

(30) Priority: **28.04.89 GB 8909861**

(43) Date of publication of application:
**31.10.90 Bulletin 90/44**

(84) Designated Contracting States:
**DE FR GB IT**

(71) Applicant: **ELFAB-HUGHES LIMITED**
**Alder Road, West Chirton Industrial Estate**
**North Shields, Tyne & Wear, NE29 8RQ(GB)**

(72) Inventor: **Morrin, Charles Bartholomew**
**192 Heaton Park Road**
**Newcastle Upon Tyne(GB)**
Inventor: **Balback, Stephen**
**100 Reading Road**
**South Shields, Tyne & Wear(GB)**

(74) Representative: **Sanderson, Michael John et al**
**MEWBURN ELLIS 2 Cursitor Street**
**London EC4A 1BQ(GB)**

(54) **Safety pressure relief device for pressure vessels.**

(57) A safety pressure relief device for a pressure vessel comprises annular inlet and outlet support means (2,4,6) and a reverse bursting disc (8) having an outer annular flange portion (10) clamped between the inlet and outlet support means (2,4,6), and a central convex-concave dome portion (12), one or more lines of weakness, such as a score (16), being formed in the disc (8). The outlet support means (4,6) is provided with one or more protrusions (18) extending inwardly and upwardly towards the concave face of the dome portion (12) and terminating radially inwardly of an adjacent line of weakness (16) whereby, on reversal of the dome portion (12), a region of said dome portion (12) engages the free end of the protrusion (18) which acts as a fulcrum for the reversing dome portion (12), said region being lifted relative to the remainder of the dome portion (12) so that tearing of the disc (8) is effected in the adjacent line of weakness (16).

Fig.2

Fig.3

## SAFETY PRESSURE RELIEF DEVICE FOR PRESSURE VESSELS

This invention relates to safety pressure relief devices for pressure vessels and more particularly to such devices incorporating reverse bursting discs.

It is now well established practice to incorporate reverse bursting discs in pressure vessels containing either gas or liquids under pressure, currently preferred discs incorporating one or more lines of weakness therein, conveniently embrittling scores, whereby, on reversal, the disc separates or tears along the lines of weakness to permit relief of the vessel.

Although such discs work effectively for gaseous media and for liquids under relatively high pressures, certain problems can arise in low pressure liquid situations.

It has been found that, in such situations, the disc can fail to tear along the lines of weakness until pressures substantially higher than the nominal reverse bursting pressure of the disc are reached.

More particularly, and on initial reversal, the dome portion of the disc flips through and increases the volume of the system on the inlet side of the disc. Thus there is a pressure drop and, as the low pressure liquid cannot immediately fill the space behind the dome portion, an instantaneous partial vacuum is formed between the dome portion and the liquid. This reduces the kinetic energy/momentum of the buckling dome portion to such an extent that there is insufficient force present to tear open when the liquid pressure has risen to, typically, 1.5 to 3.0 times the nominal bursting pressure.

It would be desirable to be able to provide a safety pressure relief device incorporating a reverse bursting disc effective even in relatively low pressure liquid situations.

According to the present invention there is provided a safety pressure relief device for a pressure vessel, the device comprising annular inlet and outlet support means and a reverse bursting disc. the bursting disc including an outer annular flange portion clamped between said inlet and outlet support means, and a central convex-concave dome portion, one or more lines of weakness being formed in the disc, and the outlet support means being provided with one or more protrusions thereon extending in a direction inwardly of the bore therethrough and upwardly towards the concave surface of the dome portion of the disc, the or each protrusion terminating radially inwardly of an adjacent line of weakness, the arrangement being such that, for the or each protrusion and on reversal of the dome portion of the disc, a region of said dome portion of the disc engages the free end of the protrusion which acts as a fulcrum for the reversing dome portion whereby said region is lifted relative to the remainder of the reversing part of the dome portion of the disc and tearing of the disc is effected in the adjacent line of weakness.

In a preferred device, the or each line of weakness comprises a score formed in the flange portion of the disc, conveniently in the outlet face of said flange portion. Alternatively, however, the or each score may be in the dome portion of the disc in the transition region between the dome portion and the flange portion.

The line of weakness may comprise a continuous circular score or a discontinuous score of generally horse-shoe shape defining an unscored tab region to the disc. In the latter case, it is preferred that the outlet support means includes a radially inwardly projecting hinge region circumferentially aligned with the tab region of the disc and about which the dome portion of the disc hinges on reversal.

Preferably the outlet support means comprise an outlet holder, and an outlet support ring positioned between the outlet holder and the flange portion of the disc, the or each protrusion being integrally formed on the outlet support ring.

In an alternative arrangement, the outlet support means comprises an annular outlet holder, the or each protrusion being integrally formed on said outlet holder.

By way of examples only, embodiments of the invention will now be described in greater detail with reference to the accompanying drawings of which:

Fig. 1 shows part of a device according to the invention partly cut away;

Fig. 2 is a vertical section through part of a device according to the invention with the disc in its operative position;

Fig.3 is the vertical section of Fig. 2 showing the dome portion subsequent to reversal;

Figs. 4 and 5 are vertical sections through part of further devices according to the invention, and

Fig. 6 shows part of a still further device according to the invention partly cut away.

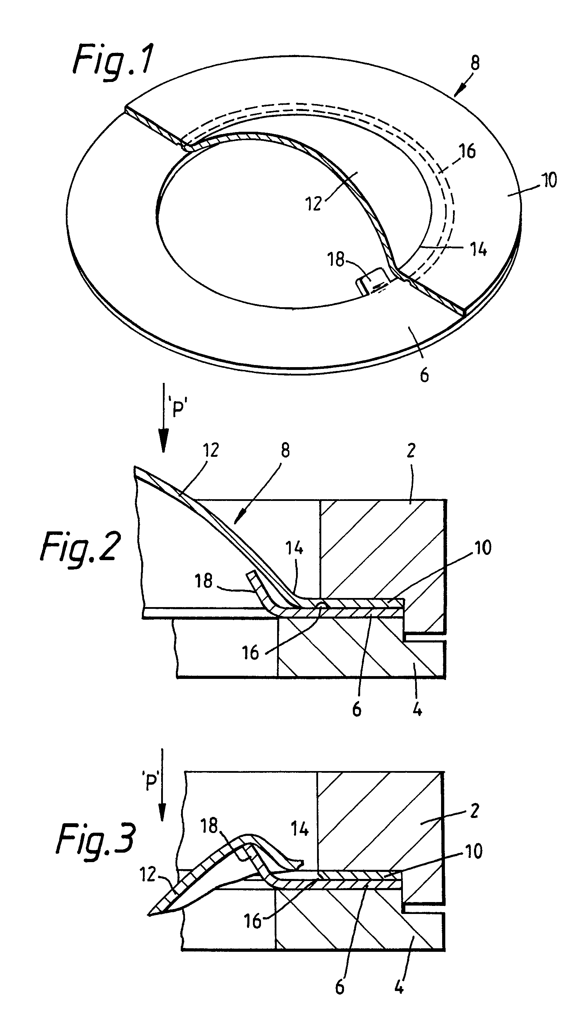

Referring to Figs. 1 to 3 of the drawings, the illustrated safety pressure relief device, which is for location on a pressure vessel in the conventional manner, comprises an annular inlet support member or holder 2, an annular outlet support member or holder 4, an annular outlet support ring 6 and a reverse bursting disc indicated generally at 8.

The disc 8 includes an annular flange portion 10 to which the outlet support ring 6 is physically secured, for example by welding or by riveting, and a convex-concave dome portion 12 connected to the flange portion 10 by a transition region 14. The pressure of fluid within the associated vessel is incident upon the convex surface of the dome portion 12 of the disc 8 as indicated by the arrow 'P'.

A circular score or groove 16 concentric with the flange portion 10 of the disc 8 is formed in the outlet face of the flange portion 10 adjacent the transition region 14, the location of the groove 16 to the outlet side of the disc preventing corrosion and the like by the process medium within the vessel.

The radially inner edge of the inlet holder 2 is substantially axially aligned with the groove 16, while the outlet holder 4 and outlet support ring 6 extend radially inwardly of the flange portion 10 of the disc 8 to provide support for the transition region 14 of the disc 8.

Integrally formed with the outlet support ring 6 is a small, generally rectangular protrusion or projection 18 extending inwardly of the support ring 6 and upwardly towards the dome portion 12, the protrusion terminating just out of contact with the dome portion 12, and at a position radially inward of the groove 16 in the flange portion 10.

When the pressure of fluid within the vessel reaches the critical value of the disc B, the dome portion 12 thereof reverses, and, in so doing, impinges upon the free end of the protrusion 18. This fixed protrusion 18, which is capable of withstanding the forces applied thereto by the dome portion 12, acts as a fulcrum for the associated region of the reversing dome portion 12 and whereby that part of the dome portion 12 between the free end of the protrusion 18 and the groove 16 is lifted relative to the remaining body part of the dome portion. This lifting effect created by the presence of the protrusion 18 serves to initiate a tear in the groove 16 at the region of the groove 16 adjacent the protrusion 18 as indicated in Fig. 3, this tear then progressing along the groove 16 in both directions away from the protrusion 18.

Although applicable to gaseous and high pressure liquid media, the described disc is particularly suited to vessels containing low pressure liquid in which cases the momentum/kinetic energy of the reversing dome portion 12 may not in itself be sufficient to effect the desired tearing along the groove 16. The presence of the protrusion 18 effectively supplements the inherent forces within the reversing dome portion to increase the tearing force applied to the groove 16 and to ensure tearing occurs even at relatively low pressures and without undue delay or pressure build-up after initial reversal of the dome portion 12.

It will be appreciated that the precise construction of the device according to the invention can vary from that shown in Figs. 1 to 3. For example there may be more than one protrusion 18 circumferentially spaced about the outlet support ring 6, while the groove 16 may be discontinuous and/or comprise perforations or the like.

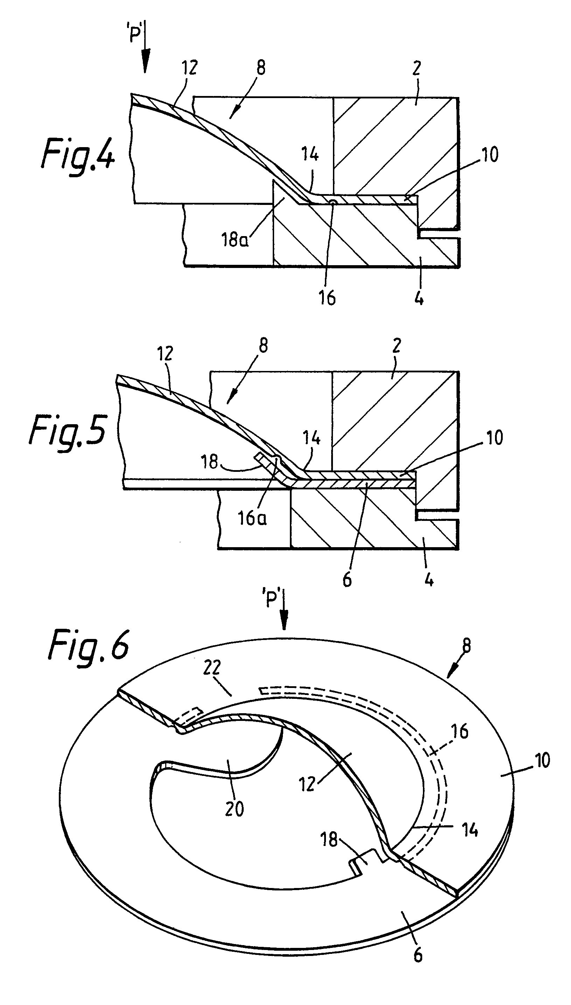

The or each protrusion may be formed on the outlet holder 4 as shown at 18a in Fig. 4, in which case the device may or may not incorporate an outlet support ring.

The groove 16 may be other than in the outlet face of the flange portion 10, for example in the inlet face of said flange portion 10, in the transition zone 14 or in the inlet or outlet face of the dome portion 12 - Fig. 5 shows a groove 16a in the outlet face of the dome portion 12 adjacent the transition region 14. In all cases, the free end of the or each protrusion 18 terminates radially inwardly of the groove or grooves 16.

Fig. 6 shows an embodiment of the invention in which the outlet support ring is provided with a generally arcuate, radially-inwardly projecting hinge region 20 substantiallly diametrically opposite the protrusion 18, the groove 16 in the flange portion 10 of the disc 8 being of generally horse- shoe shape and being discontinuous over the region of the flange portion 10 circumferentially co-incident with the hinge region 20 to define a tab region 22 to the disc 8.

Such an arrangement ensures that, on bursting, the dome portion 12 pivots or hinges about the hinge region 20 of the outlet support ring 6 which absorbs some of the kinetic energy of the reversing dome portion, said dome portion 12 remaining attached to the flange portion 10 along the tab region 22 thereof, thus preventing detachment of the dome portion 12 that would otherwise occur, particularly with gaseous media.

The hinge region 20 may be provided on the outlet holder 4 instead of, or as well as, on the outlet support ring 6, while the hinge region may be other than diametrically opposite the protrusion 18.

The inlet holder 2 may terminate radially inwardly or radially outwardly of the groove 16 rather than co-incident therewith as shown in Figs. 2 to 4.

The protrusion or protrusions 18 preferably do not contact the dome portion 12 in its normal operative position - if it does so contact, the contact should not be such as to affect the critical pressure at which the disc reverses.

The protrusion 18 is designed so that, on reversal, the dome portion 12 does not tear itself on the free end of the protrusion. As mentioned above, the protrusion is sufficiently rigid not to distort on contact by the dome portion, thereby to act as a fulcrum for the buckled dome and about which a stress-raising levering force is exerted on the groove 16 sufficient to cause initial tearing of the groove.

In one embodiment of the invention, the inlet and outlet support means are welded together to form a disposable, throw-away unit.

## Claims

1. A safety pressure relief device for a pressure vessel comprising annular inlet and outlet support means (2,4,6) and a reverse bursting disc (8), the bursting disc (8) including an outer annular flange portion (10) clamped between said inlet and outlet support means (2,4,6), and a central convex-concave dome portion (12), one or more lines of weakness (16) being formed in the disc (8), characterised in that the outlet support means (4,6) is provided with one or more protrusions (18) thereon extending in a direction inwardly of the bore therethrough and upwardly towards the concave surface of the dome portion (12) of the disc (8), the or each protrusion (18) terminating radially inwardly of an adjacent line of weakness (16), the arrangement being such that, for the or each protrusion (18) and on reversal of the dome portion (12) of the disc (8), a region of said dome portion (12) of the disc (8) engages the free end of the protrusion (18) which acts as a fulcrum for the reversing dome portion (12) whereby said region is lifted relative to the remainder of the reversing part of the dome portion (12) of the disc (8) and tearing of the disc (8) is effected in the adjacent line of weakness (16).

2. A safety pressure relief device as claimed in claim 1 in which the or each line of weakness comprises a score (16) formed in the flange portion (10) of the disc (8).

3. A safety pressure relief device as claimed in claim 2 in which the or each score (16) is formed in the outlet face of the flange portion (10) of the disc (8).

4. A safety pressure relief device as claimed in claim 1 in which the or each line of weakness comprises a score (16a) formed in the dome portion (12) of the disc (8).

5. A safety pressure relief device as claimed in claim 1 in which the or each line of weakness comprises a score formed in the transition region (14) between the dome portion (12) and the flange portion (10) of the disc (8).

6. A safety pressure relief device as claimed in any one of claims 1 to 5 in which the line of weakness comprises a continous circular score (16).

7. A safety pressure relief device as claimed in any one of claims 1 to 5 in which the line of weakness comprises a discontinuous score (16) of generally horse-shoe shape defining an unscored tab region (22) to the disc (8).

8. A safety pressure relief device as claimed in claim 7 in which the outlet support means (4,6) includes a radially inwardly projecting hinge region (20) aligned with the tab region (22) of the disc (8) and about which the dome portion (12) of the disc (8) hinges on a reversal.

9. A safety pressure relief device as claimed in any one of claims 1 to 8 in which the outlet support means comprises an outlet holder (4) and an outlet support ring (6) positioned between the outlet holder (4) and the flange portion (10) of the disc (8), the or each protrusion (18) being integrally formed on the outlet support ring (6).

10. A safety pressure relief device as claimed in any one of claims 1 to 8 in which the outlet support means comprises an annular outlet holder (4), the or each protrusion (18a) being integrally formed on said outlet holder (4).

Fig.1

Fig.2

Fig.3

*Fig.4*

*Fig.5*

*Fig.6*